Europäisches Patentamt

European Patent Office

Office européen des brevets

(19)

(11) **EP 1 413 736 B1**

(12) **FASCICULE DE BREVET EUROPEEN**

(45) Date de publication et mention
de la délivrance du brevet:
**30.11.2005 Bulletin 2005/48**

(51) Int Cl.⁷: **F02K 1/76**

(21) Numéro de dépôt: **03292362.5**

(22) Date de dépôt: **26.09.2003**

(54) **Inverseur de poussée electromecanique de turboréacteur à portes**

Elektromechanische Schubumkehrvorrichtung für ein Bläsertriebwerk mit Umkehrklappen

Electromecanical thrust reverser for a turbofan engine with thrust reverser doors

(84) Etats contractants désignés:
**DE ES FR GB IT SE**

(30) Priorité: **25.10.2002 FR 0213403**

(43) Date de publication de la demande:
**28.04.2004 Bulletin 2004/18**

(73) Titulaire: **HISPANO SUIZA**
**92700 Colombes (FR)**

(72) Inventeurs:
• **COLOTTE, Baptiste**
**77000 Melun (FR)**
• **COURPIED, Alexandre**
**75007 Paris (FR)**
• **CROIXMARIE, Marc**
**91830 Auvernaux (FR)**

• **JOLAND, Patrick**
**77166 Evry Gregy sur Yerres (FR)**
• **LE GOUELLEC, Gilles**
**75018 Paris (FR)**
• **MICHAUD, Marion**
**94320 Thiais (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
EP-A- 1 004 798    US-A- 4 543 783
US-A- 5 960 626    US-A- 6 094 908
US-B1- 6 439 504

**Description**

Arrière-plan de l'invention

La présente invention se rapporte au domaine général des inverseurs de poussée pour turboréacteur à double flux. Elle vise plus particulièrement un inverseur de poussée électromécanique comportant au moins deux éléments déplaçables coopérant, en position d'ouverture de inverseur, à la production de l'inversion de poussée, tel que, par exemple, un inverseur de poussée à portes, à grilles ou à coquilles.

Les inverseurs de poussée équipant les turboréacteurs à double flux sont bien connus dans le domaine de l'aéronautique. Ils servent à augmenter la sécurité d'un avion en fournissant une aide au freinage lors de l'atterrissage de celui-ci. Les inverseurs de poussée se présentent généralement sous la forme d'au moins deux éléments mobiles, telles que des portes coulissantes, qui sont susceptibles d'être déplacés par rapport à la nacelle du turboréacteur par l'intermédiaire de vérins de commande de façon à constituer, lors du fonctionnement en inversion de poussée c'est à dire en position d'ouverture, un obstacle pour une partie des gaz issus du turboréacteur qui sont redirigés vers l'avant de façon à fournir une poussée inverse à l'avion.

Le déplacement des portes coulissantes est généralement assuré par un système de commande hydraulique. Un tel système de commande comporte essentiellement des vérins hydrauliques de commande des portes de l'inverseur, un bloc hydraulique de commande pour alimenter les chambres des vérins de commande en fluide hydraulique pressurisé et des circuits hydrauliques. La puissance hydraulique nécessaire à l'alimentation de ce type de système de commande est prélevée directement sur le circuit hydraulique de l'avion.

Au cours de l'ouverture et de la fermeture de l'inverseur, il est impératif que les portes se déplacent de façon synchronisée. En effet, un déplacement non synchronisé des portes engendre des contraintes dynamiques élevées au niveau de l'inverseur qui peuvent causer des dégâts importants sur l'inverseur et le turboréacteur. Une mauvaise synchronisation du déplacement des portes résulte d'un écart d'efforts entre les portes qui conduisent à un écart de position important entre celles-ci. De plus, il est possible que les efforts appliqués aux portes de l'inverseur soient différents. Dans ce cas, des risques de distorsion et donc d'endommagement de l'inverseur peuvent apparaître.

Afin de pouvoir détecter une telle variation des efforts exercés sur un inverseur de poussée à commande hydraulique et un écart d'efforts entre les portes de celui-ci, il est connu de munir les vérins de commande de capteurs mesurant la pression du fluide hydraulique présent dans les chambres des vérins. Par comparaison des mesures de pression effectuées par ces capteurs, il est alors possible de détecter une variation des efforts exercés sur inverseur et un éventuel écart d'efforts entre les portes afin d'éviter toute torsion de l'inverseur conduisant à un écart de position entre les portes.

La technologie d'inverseur de poussée à système de commande hydraulique présente des inconvénients liés notamment à l'encombrement que présente la réalisation des différents circuits hydrauliques. En effet, le cheminement de ces circuits est délicat à réaliser en raison de l'espace disponible réduit sur le cadre avant de l'inverseur. Un autre inconvénient de cette technologie réside dans l'utilisation d'un fluide hydraulique dangereux car corrosif et inflammable. En outre, l'utilisation de capteurs de pression pour détecter et de remédier à un blocage ou grippage éventuel des portes ne permet pas de connaître l'évolution dans le temps de l'inverseur de poussée afin d'anticiper toute dégradation et/ou vieillissement de celui-ci.

US 5,960,626 et US 6,439,504 décrivent chacun un inverseur de poussée comportant des portes déplaçables par l'intermédiaire de vérins de commande entraînés par des moteurs électriques, ces derniers étant commandés par un boîtier électronique relié au FADEC de l'avion.

Objet et résumé de l'invention

La présente invention vise donc à pallier de tels inconvénients en proposant un inverseur de poussée électromécanique d'encombrement réduit qui permet de détecter et de remédier à la fois à une éventuelle variation des efforts exercés sur l'inverseur et à un éventuel écart d'efforts entre les portes afin de permettre une parfaite synchronisation de leurs déplacements.

A cet effet, il est prévu un inverseur de poussée pour turboréacteur, comportant deux portes déplaçables chacune entre une position d'ouverture et une position de fermeture de l'inverseur par l'intermédiaire d'au moins un vérin de commande, deux moteurs électriques entraînant chacun ledit au moins un vérin de commande de chaque porte ; chaque moteur étant contrôlé par un boîtier électronique de commande relié à un calculateur électronique pleine autorité ; et deux moyens d'asservissement du déplacement de chacune des portes en fonction de consignes de positions déterminées, caractérisé en ce que les moyens d'asservissement comportent des moyens de calcul d'une variation des efforts exercés sur l'inverseur et des moyens pour compenser ladite variation des efforts afin d'assurer un déplacement synchronisé desdites portes en fonction d'une éventuelle variation des efforts exercés sur l'inverseur et d'un éventuel écart d'efforts entre les deux portes.

De préférence, les moyens de calcul d'une variation des efforts comportent des moyens de calcul des dérivées par rapport au temps de la vitesse de rotation de chacun des moteurs électriques ; des moyens de calcul des dérivées par rapport au temps du courant d'excitation alimentant chacun des moteurs électriques ; et un moyen de calcul d'une variation des efforts exercés sur inverseur à partir de ce calcul des dérivées de la vitesse de rotation et du courant d'excitation de chacun des moteurs électriques.

Ainsi, les moyens d'asservissement selon l'invention permettent de détecter une éventuelle variation des efforts exercés sur l'inverseur et de les compenser. Lorsqu'une telle variation est détectée, l'invention permet de compenser cette variation afin de réguler la vitesse de déplacement des portes. Cette compensation s'effectue en agissant sur le courant d'excitation de chacun des moteurs électriques en fonction du calcul de la variation des efforts.

De même, les moyens d'asservissement comportent avantageusement des moyens de calcul d'un écart d'efforts entre les deux portes et des moyens de correction de cet écart d'efforts. Le calcul de l'écart d'efforts s'effectue à partir d'une comparaison des dérivées du courant d'excitation de chacun des moteurs électriques.

De la sorte, les moyens d'asservissement selon l'invention permettent également de détecter un éventuel écart d'efforts entre les portes de inverseur afin de synchroniser leurs déplacements. En effet, un écart d'efforts peut engendrer des risques de distorsion et donc d'endommagement de l'inverseur. Les moyens d'asservissement permettent de corriger un tel écart en agissant soit sur le courant d'excitation soit sur la vitesse de rotation de chacun des moteurs électriques.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est un schéma illustrant un exemple de réalisation de l'inverseur de poussée selon invention ; et
- la figure 2 est un schéma fonctionnel partiel de l'exemple de réalisation de l'inverseur de poussée de la figure 1.

Description détaillée d'un mode de réalisation

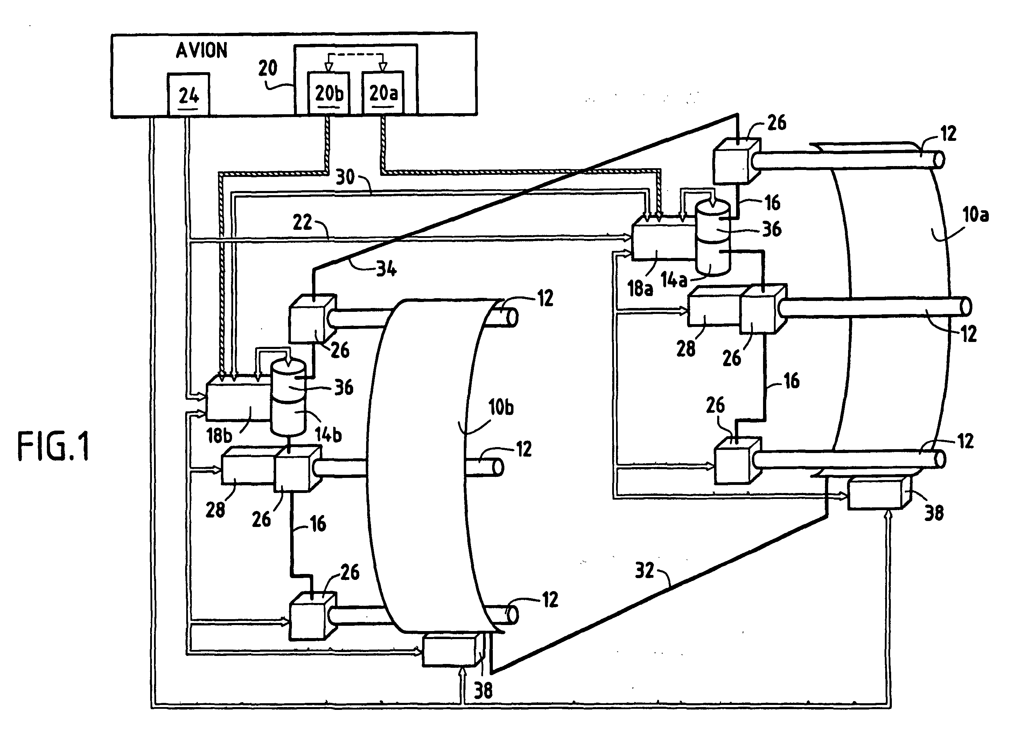

On se réfère tout d'abord à la figure 1 qui illustre un exemple de réalisation d'un inverseur de poussée selon l'invention.

L'inverseur de poussée comporte deux portes 10a, 10b déplaçables chacune entre une position d'ouverture et une position de fermeture de l'inverseur par au moins un vérin de commande 12 (trois vérins sont représentés sur la figure 1, un vérin central et deux vérins positionnés aux deux extrémités latérales de chaque porte).

L'inverseur comporte en outre deux moteurs électriques 14a, 14b contrôlant chacun le déplacement d'une porte. Ces moteurs électriques entraînent les vérins 12 de commande de chaque porte 10a, 10b par l'intermédiaire d'arbres de transmission 16 reliant les vérins de commande de chaque porte entre eux.

Chaque moteur électrique 14a, 14b est directement monté sur un boîtier électronique de commande 18a, 18b qui gère toute la séquence de déplacement des deux portes et régule la vitesse de rotation du moteur électrique. Chaque boîtier électronique de commande 18a, 18b est relié électriquement à l'une des deux voies 20a, 20b d'un calculateur électronique pleine autorité 20 communément dénommé FADEC (Full Authority Digital Engine Control). L'ordre de déploiement ou de rétraction de l'inverseur de poussée est émis par le calculateur électronique pleine autorité vers les boîtiers électroniques 18a, 18b. Il est également possible d'intégrer le boîtier électronique dans le calculateur électronique pleine autorité.

L'alimentation électrique des boîtiers électroniques de commande 18a, 18b est effectuée par l'intermédiaire d'un harnais électrique 22 connecté sur le réseau électrique 24 de l'avion sur lequel le turboréacteur est monté. Les boîtiers électroniques de commande transforment et adaptent le signal électrique afin d'alimenter les moteurs électriques 14a, 14b.

Les vérins 12 de commande des portes de l'inverseur sont du type électromécanique. Ils sont entraînés par des boîtiers d'engrenages 26 montés sur chaque vérin. La loi de commande (en vitesse ou de type tout ou rien) des portes 10a, 10b de l'inverseur est transmise des boîtiers électroniques vers chaque vérin de commande 12 par l'intermédiaire des moteurs électriques 14a, 14b, des arbres de transmission 16 et des boîtiers d'engrenages 26.

Une prise de mouvement 28 peut être prévue au niveau de l'un des vérins de commande 12 afin de permettre une commande manuelle de la porte associée au vérin de commande, notamment lors des opérations de maintenance de l'inverseur de poussée. Sur l'exemple illustré par la figure 1, le vérin 12 central présente une telle prise de mouvement 28 au niveau de son boîtier d'entraînement 26. Les boîtiers d'entraînement de chaque porte étant reliés entre eux, cette prise permet ainsi à un opérateur en charge de la maintenance de piloter l'ouverture et/ou la fermeture des portes de l'inverseur à l'aide d'une seule manivelle, par exemple. L'accès à la prise de mouvement 28 de chaque porte peut être reliée électriquement au boîtier électronique de commande 18a, 18b et ainsi désactiver l'alimentation électrique lors de ces opérations de maintenance afin d'éviter tout déploiement intempestif de l'inverseur.

Les boîtiers électroniques de commande 18a, 18b peuvent en outre échanger des données entre eux par l'intermédiaire d'une liaison électrique 30 de type harnais. Ces échanges de données entre les deux boîtiers électroniques permettent notamment d'assurer une comparaison des informations de positions provenant des deux portes. Un lien mécanique 32 entre les deux portes 10a, 10b et un arbre flexible de synchronisation 34 reliant entre eux des vérins de chaque porte peuvent être prévus afin de faciliter la synchronisation du déplacement des deux portes.

L'inverseur de poussée comporte trois niveaux de verrouillage qui permettent d'assurer individuellement la retenue de l'inverseur de poussée.

Un premier niveau de verrouillage est réalisé par un dispositif de blocage mécanique 36 appelé verrou primaire, associé à chaque porte de l'inverseur. Chaque verrou primaire est monté directement sur le moteur électrique 14a, 14b. Ces verrous primaires 36 permettent d'assurer une retenue de la porte qui lui est associée. Par exemple, ils peuvent être de type frein à disque ou de type blocage par pion venant entraver le mouvement de l'arbre de transmission.

Compte-tenu que les deux portes 10a, 10b sont liées mécaniquement par l'intermédiaire des liens 32 et 34, le verrou primaire 36 de l'une des portes 10a, 10b constitue un second niveau de verrouillage pour l'autre porte dont il forme un verrou secondaire. Le verrou secondaire est destiné à reprendre les chargements de la porte en cas de défaillance du verrou primaire. Ainsi, si le dispositif de blocage de l'une des portes est considéré comme le verrou primaire, le dispositif de blocage de l'autre porte peut être considéré comme étant le verrou secondaire et vice-versa.

Le troisième niveau de verrouillage est réalisé par un dispositif de verrouillage en butée 38, appelé verrou tertiaire, qui est positionné à une extrémité latérale de chaque porte 10a, 10b ou d'une seule porte. Ces verrous tertiaires peuvent être reliés aux boîtiers électroniques 18a, 18b, au calculateur FADEC 20 et/ou directement au cockpit de l'avion. Ils sont de préférence commandés directement depuis le cockpit de l'avion afin d'assurer une sûreté de fonctionnement suffisante et de s'affranchir d'éventuels modes communs. En effet, lorsque reliés au FADEC ou au cockpit de l'avion, les verrous tertiaires restent opérationnels même en cas de défaillance des boîtiers électroniques de commande. Ils permettent de reprendre les chargements de la porte de l'inverseur en cas de défaillance des verrous primaire et secondaire.

L'inverseur de poussée selon l'invention comporte en outre des moyens d'asservissement du déplacement de chacune des portes 10a, 10b en fonction de consignes de positions prédéterminées. Ces moyens d'asservissement permettent d'assurer un déplacement synchronisé entre les portes en prenant en compte à la fois une éventuelle variation des efforts exercés sur l'inverseur qui sont ressentis individuellement au niveau de chaque porte et un éventuel écart d'efforts qui peut exister entre les deux portes.

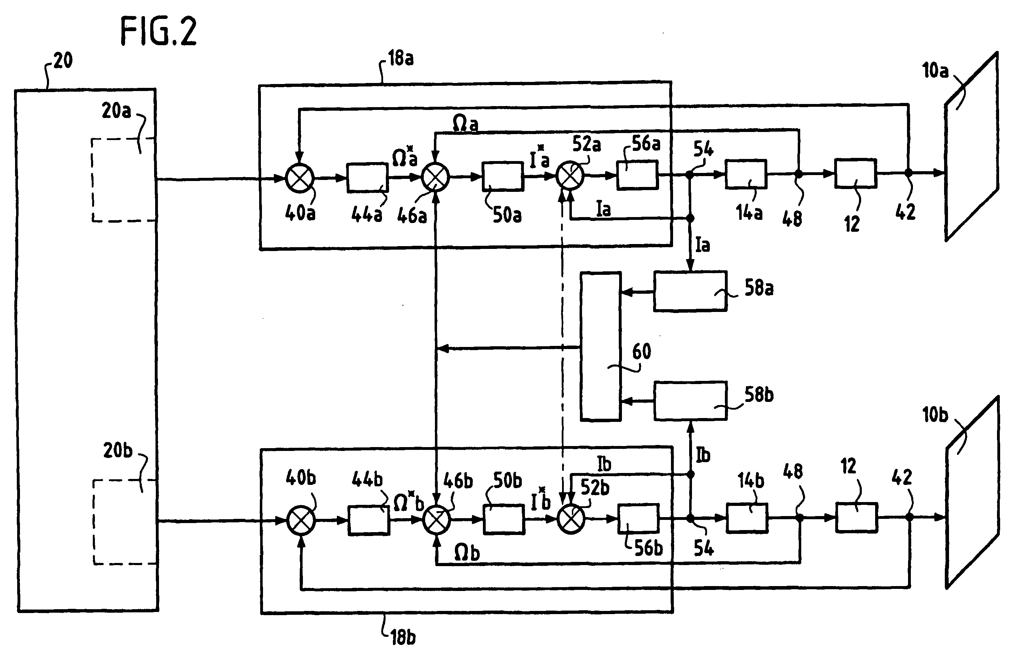

Les efforts exercés sur l'inverseur de poussée varient tout au long du déploiement ou de la rétractation des portes de celui-ci de sorte que le couple à fournir par chaque moteur électrique pour vaincre ces efforts n'est pas constant au cours du déplacement des portes. Ces efforts exercés sur l'inverseur comprennent notamment les efforts aérodynamiques, les efforts de frottements et une éventuelle dégradation de l'inverseur de poussée. Les moyens d'asservissement selon l'invention permettent de détecter une éventuelle variation de ces efforts et de les compenser, dans le cas où une telle variation existerait. Sachant que le couple à fournir à chaque moteur électrique est proportionnel au courant d'excitation du moteur, les moyens d'asservissement agissent sur ce courant d'excitation, le long d'un circuit d'asservissement détaillé ci-après en référence à la figure 2, afin de vaincre les efforts exercés sur l'inverseur.

Le calculateur électronique pleine autorité 20 délivre une consigne d'ouverture ou de fermeture à l'inverseur de poussée le long d'un circuit d'asservissement. Une fois cette consigne de position délivrée, un premier comparateur 40a, 40b équipant chaque boîtier électronique de commande 18a, 18b analyse l'écart entre la consigne de position issue du FADEC 20 et la position réelle de chaque porte. La position réelle de chaque porte est mesurée, par exemple, par un capteur de position 42 positionné en sortie de l'un des vérins 12 de commande de la porte.

Chaque boîtier électronique de commande 18a, 18b comporte un premier réseau correcteur 44a, 44b qui délivre une consigne de vitesse $\Omega^*a$, $\Omega^*b$ de rotation pour chaque moteur électrique 14a, 14b lorsqu'il existe un écart entre la consigne de position et la position mesurée de chaque porte de l'inverseur.

En aval du premier réseau correcteur, le long du circuit d'asservissement, un deuxième comparateur 46a, 46b permet de comparer, pour chaque moteur électrique 14a, 14b, la consigne de vitesse $\Omega^*a$, $\Omega^*b$ de rotation élaborée par le premier réseau correcteur 44a, 44b et la vitesse réelle $\Omega a$, $\Omega b$ de rotation telle que mesurée au niveau d'un axe de rotation des moteurs électriques 14a, 14b. La mesure de la vitesse $\Omega a$, $\Omega b$ de rotation de chaque moteur électrique est effectuée par un « resolver » (capteur de rotation) 48 ou une roue phonique par exemple.

Lorsqu'il existe un écart entre la consigne de vitesse $\Omega^*a$, $\Omega^*b$ et la vitesse mesuré $\Omega a$, $\Omega b$ de rotation de chaque moteur électrique, un deuxième réseau correcteur 50a, 50b permet de calculer la dérivée par rapport au temps de la vitesse de rotation mesurée pour chaque moteur. Cette dérivée de la vitesse sera utilisée pour le calcul d'une éventuelle variation du couple d'efforts exercés sur l'inverseur.

Par ailleurs, chaque deuxième réseau correcteur élabore une consigne de courant d'excitation $I^*a$, $I^*b$ alimentant chaque moteur électrique 14a, 14b lorsqu'il existe un écart entre la consigne de position issue du FADEC 20 et la position mesurée de chaque porte de inverseur.

En aval du deuxième réseau correcteur 50a, 50b, le long du circuit d'asservissement, un troisième comparateur 52a, 52b permet de comparer, pour chaque moteur électrique 14a, 14b, la consigne de courant d'excitation I$^*$a, I$^*$b ainsi élaborée et le courant d'excitation Ia, Ib mesuré qui alimente les moteurs électriques. Le courant d'excitation Ia, Ib est mesuré en entrée de chaque moteur électrique. Par exemple, les moyens de mesure du courant peuvent être une pince ampère-métrique 54.

Lorsqu'il existe un écart entre la consigne de courant d'excitation I$^*$a, I$^*$b et le courant d'excitation Ia, Ib tel que mesuré, un troisième réseau correcteur 56a, 56b permet de calculer la dérivée par rapport au temps du courant d'excitation mesuré pour chaque moteur.

A partir de ce calcul d'une variation du courant d'excitation, il est alors possible de calculer une éventuelle variation du couple d'efforts exercés sur l'inverseur. En effet, il est connu que :

$$\Gamma moteur = J \times (d\Omega/dt) + \Gamma résist. \quad (1)$$

dans laquelle : $\Gamma moteur$ désigne le couple délivré par chaque moteur électrique ; $J$ est une constante correspondant à l'inertie mécanique de tout l'inverseur de poussée ; $d\Omega/dt$ est la dérivée par rapport au temps de la vitesse de rotation pour chaque moteur électrique et $\Gamma résist$ représente le couple d'efforts exercés sur l'inverseur de poussée.

En effectuant une dérivée par rapport au temps de l'équation (1) à l'aide d'un calculateur 58a, 58b, il est donc possible de calculer une éventuelle variation du couple d'efforts exercés sur l'inverseur (qui correspond à d$\Gamma résist$/dt). En effet, la dérivée par rapport au temps de l'équation (1) s'écrit de la manière suivante :

$$d\Gamma moteur/dt = J \times (d^2\Omega/dt^2) + (d\Gamma résist/dt) \quad (2)$$

dans laquelle : la dérivée du couple moteur (d$\Gamma moteur$/dt) délivré par chaque moteur électrique 14a, 14b est proportionnelle à la dérivée du courant d'excitation Ia, Ib mesuré qui les alimente (le calcul de la dérivée de ces courants est effectué par le troisième réseau correcteur 56a, 56b) ; l'inertie mécanique $J$ de l'inverseur de poussée est une constante préalablement évaluée et l'accélération $d\Omega/dt$ des moteurs électriques est obtenue grâce au calcul de la dérivée de la vitesse effectuée par le deuxième réseau correcteur 50a, 50b.

Lorsqu'une variation du couple d'efforts exercés sur l'inverseur de poussée a ainsi été calculée, il est alors nécessaire de fournir au moteur électrique 14a, 14b de chaque porte un couple moteur capable de vaincre de tels efforts. Etant donné que le couple moteur est proportionnel au courant d'excitation alimentant les moteurs électriques, le couple moteur à fournir pour vaincre ces efforts est réalisé par une simple action corrective sur le courant d'excitation. Cette action qui est calculée par le calculateur 58a, 58b est transmise au niveau du troisième comparateur 52a, 52b de chaque boîtier électronique de commande 18a, 18b.

Par ailleurs, les moyens d'asservissement du déplacement des portes de l'inverseur selon l'invention permettent de détecter et de remédier à un éventuel écart d'efforts entre les deux portes. Un tel écart peut en effet exister. Dans ce cas, les efforts appliqués aux deux portes sont différents et des risques de distorsion et donc d'endommagement de l'inverseur peuvent apparaître. Il est donc important de comparer les courants d'excitation Ia, Ib alimentant chaque moteur électrique 14a, 14b afin de modifier la consigne de vitesse $\Omega^*$a, $\Omega^*$b ou la consigne de courant I$^*$a, I$^*$b appliquée à l'un de ces moteurs pour le ralentir (ou l'accélérer). Ceci a pour effet de réduire l'écart de position entre les deux portes, donc de faciliter la synchronisation du déplacement des portes et de diminuer les risques de torsion de l'inverseur.

En partant de l'équation (2) mentionnée ci-dessus, et sachant que le couple moteur ($\Gamma moteur$) délivré par chaque moteur électrique est proportionnel au courant d'excitation (soit I = k $\times$ $\Gamma moteur$), on en déduit que la dérivée par rapport au temps du courant d'excitation pour chaque moteur électrique s'écrit :

$$dI/dt = k \times \left[ J \times (d^2\Omega/dt^2) + (d\Gamma résist/dt) \right] \quad (3)$$

De plus, étant donné que les deux moteurs électriques 14a, 14b évoluent sensiblement à la même vitesse de rotation afin d'assurer une synchronisation du déplacement des portes de l'inverseur, on en déduit :

$$k \times \left[ J \times (d^2\Omega a / dt^2) \right] \approx k \times \left[ J \times (d^2\Omega b / dt^2) \right] \quad (4)$$

Par conséquent, en comparant les dérivées de courant d'excitation pour chaque moteur électrique, on obtient par combinaison des équations (3) et (4) :

$$(dI / dt)_a - (dI / dt)_b \approx k \times \left[ (d\Gamma r\acute{e}sist / d_t)_a - (d\Gamma r\acute{e}sist / dt)_b \right]$$

dans laquelle $(d\Gamma r\acute{e}sist/dt)a$ et $(d\Gamma r\acute{e}sis/dt)_b$ représentent la variation des efforts exercés sur chaque porte de l'inverseur de poussée.

De la sorte, en comparant les dérivées de courant d'excitation pour chaque moteur électrique, on en déduit un éventuel écart d'efforts entre les deux portes de l'inverseur. En cas d'efforts différents appliqués sur les portes, il est ainsi possible de les détecter. Le calcul de chacune des dérivées de courant d'excitation est obtenu par le troisième réseau correcteur 56a, 56b de chaque boîtier électronique de commande 18a, 18b et leur comparaison est effectuée au niveau d'un comparateur 60.

Lorsqu'un tel écart d'efforts entre les deux portes est ainsi détecté, il est alors nécessaire d'exercer l'action corrective souhaitée sur l'une ou sur les deux portes. Par exemple, l'action corrective peut se traduire soit par l'arrêt complet du système de l'inverseur, soit par le retour en arrière des portes, soit par le recul de quelques centimètres des portes puis le redémarrage dans le sens initialement souhaité. Cette action corrective est laissée au libre choix du nacelliste. On pourrait également imaginer de poursuivre le mouvement des portes de façon saccadée.

L'action de correction peut être réalisée au niveau de la boucle d'asservissement de la vitesse de rotation des moteurs électriques, par l'intermédiaire du deuxième réseau comparateur 46a, 46b de chaque boîtier électronique de commande. Elle peut également être réalisée au niveau de la boucle d'asservissement du courant d'excitation des moteurs électriques, par l'intermédiaire du troisième réseau comparateur 52a, 52b (en pointillés sur la figure 2).

Ainsi, chaque boîtier électronique de commande 18a, 18b présente une régulation bouclée de la position des portes 10a, 10b qui permet d'obtenir une parfaite synchronisation du déplacement des portes en fonction de la consigne issue du calculateur électronique pleine autorité 20 et en prenant en compte à la fois une éventuelle variation des efforts exercés sur inverseur et un éventuel écart d'efforts entre les deux portes de l'inverseur.

Dans la description qui vient d'être faite des moyens d'asservissement du déplacement de chacune des portes, les différents comparateurs (40a, 40b, 46a, 46b et 52a, 52b) et les réseaux correcteurs (44a, 44b, 50a, 50b et 56a, 56b) sont réalisés sous forme de logiciels de type connu et les données traitées par ces logiciels (vitesse de rotation et courant d'excitation) le sont en tant que donnés numériques. De même, le calculateur 58a, 58b et le comparateur 60 des dérivées de courant d'excitation se présentent sous la forme de logiciels. L'utilisation de logiciels pour réaliser l'asservissement du déplacement des portes selon la présente invention procure une plus grande souplesse quant à la réalisation des boucles d'asservissement de la vitesse et du courant d'excitation.

La présente invention présente ainsi de nombreux avantages, et notamment de pouvoir détecter et remédier à un éventuel écart d'efforts exercés sur l'inverseur pour éviter toute torsion de celui-ci. Cette fonction permet ainsi de protéger l'inverseur pour qu'il conserve son intégrité, surtout en cas de problème. Il est également possible de détecter, grâce au calcul du couple d'efforts, un potentiel blocage ou grippage de l'inverseur de poussée. En outre, le calcul du couple d'efforts permet de connaître l'évolution dans le temps de l'inverseur de poussée afin d'anticiper toute dégradation et/ou vieillissement de celui-ci. De manière plus générale, la présente invention permet d'améliorer la sécurité de l'inverseur de poussée.

**Revendications**

**1.** Inverseur de poussée pour turboréacteur, comportant deux portes (10a, 10b) déplaçables chacune entre une position d'ouverture et une position de fermeture de l'inverseur par l'intermédiaire d'au moins un vérin de commande (12),

- deux moteurs électriques (14a, 14b) entraînant chacun ledit au moins un vérin de commande de chaque porte ; chaque moteur étant contrôlé par un boîtier électronique de commande (18a, 18b) relié à un calculateur électronique pleine autorité (20) ; et

- deux moyens d'asservissement du déplacement de chacune desdites portes en fonction de consignes de positions déterminées **caractérisé en ce que** lesdits moyens d'asservissement comportent des moyens de calcul d'une variation des efforts exercés sur l'inverseur et des moyens pour compenser ladite variation des efforts afin d'assurer un déplacement synchronisé desdites portes en fonction d'une éventuelle variation des efforts exercés sur l'inverseur et d'un éventuel écart d'efforts entre les deux portes.

2. Inverseur de poussée selon la revendication 1, **caractérisé en ce que** lesdits moyens de calcul d'une variation des efforts comportent :

- des moyens (50a, 50b) de calcul des dérivées par rapport au temps de la vitesse de rotation ($\Omega a$, $\Omega b$) de chacun desdits moteurs électriques ;
- des moyens (56a, 56b) de calcul des dérivées par rapport au temps du courant d'excitation (Ia, Ib) alimentant chacun desdits moteurs électriques ; et
- un moyen (58a, 58b) de calcul d'une variation des efforts exercés sur l'inverseur à partir dudit calcul des dérivées de la vitesse de rotation et dudit courant d'excitation de chacun desdits moteurs électriques.

3. Inverseur de poussée selon l'une des revendications 1 et 2, **caractérisé en ce que** lesdits moyens pour compenser ladite variation des efforts sur l'inverseur comportent un moyen (58a, 58b) pour agir sur le courant d'excitation de chacun desdits moteurs électriques.

4. Inverseur de poussée selon l'une quelconque des revendications 1 à 3, **caractérisé en ce que** lesdits moyens d'asservissement comportent des moyens de calcul d'un écart d'efforts entre les deux portes et des moyens de correction dudit écart d'efforts.

5. Inverseur de poussée selon la revendication 4, **caractérisé en ce que** lesdits moyens de calcul dudit écart d'efforts entre les deux portes comportent :

- des moyens (56a, 56b) de calcul des dérivées par rapport au temps du courant d'excitation (Ia, Ib) alimentant chacun desdits moteurs électriques ;
- un moyen de comparaison (60) desdites dérivées du courant d'excitation desdits moteurs électriques ; et
- un moyen (60) de calcul dudit écart d'efforts à partir de ladite comparaison des dérivées du courant d'excitation de chaque moteur électrique.

6. Inverseur de poussée selon l'une des revendications 4 et 5, **caractérisé en ce que** lesdits moyens de correction de l'écart d'efforts comportent un moyen (60) pour agir sur le courant d'excitation ou sur la vitesse de rotation de chacun desdits moteurs électriques.

7. Inverseur de poussée selon l'une quelconque des revendications 2 à 6, **caractérisé en ce que** les moyens d'asservissement comportent des moyens (48) de mesure de la vitesse de rotation ($\Omega a$, $\Omega b$) de chacun des moteurs électriques (14a, 14b) et des moyens (54) de mesure du courant d'excitation (Ia, Ib) alimentant chacun desdits moteurs électriques.

8. Inverseur de poussée selon l'une quelconque des revendications 1 à 7, **caractérisé en ce que** les moyens d'asservissement comportent en outre des moyens (44a, 44b, 50a, 50b) pour élaborer une consigne de vitesse de rotation ($\Omega^{*}a$, $\Omega^{*}b$) et une consigne de courant d'excitation ($I^{*}a$, $I^{*}b$) pour chacun desdits moteurs électriques en fonction d'un écart entre une position réelle des portes (10a, 10b) et une consigne de position délivrée par ledit calculateur électronique pleine autorité.

9. Inverseur de poussée selon la revendication 8, **caractérisé en ce que** les moyens d'asservissement comportent en outre des moyens (42) de mesure de la position réelle desdites portes.


**Patentansprüche**

1. Schubumkehrer für ein Turbinenstrahltriebwerk, umfassend

- zwei Tore (10a, 10b), die jedes zwischen einer offenen und einer geschlossenen Position des Umkehrers mit wenigstens einem Stellglied (12) bewegbar sind,

- zwei Elektromotoren (14a, 14b), die jeder das wenigstens eine Stellglied jedes Tores antreiben, wobei jeder Motor durch eine elektronische Steuerbox (18a, 18b) gesteuert wird, die mit einem elektronischen Rechner mit voller Kontrolle (20) verbunden ist; und
- zwei Mittel zur Regelung der Bewegung von jedem der Tore in Abhängigkeit von festgelegten Positionsstellwerten,

**dadurch gekennzeichnet,**

- **daß** die Mittel zur Steuerung Mittel zur Berechnung einer Variation von auf den Umkehrer ausgeübten Kräften und Mittel zum Ausgleichen dieser Variation der Kräfte umfassen, um eine synchronisierte Bewegung der Tore in Abhängigkeit einer eventuellen Variation von Kräften zu sichern, die auf den Umkehrer ausgeübt werden und einer eventuellen Beanspruchungsdifferenz zwischen den beiden Toren.

2. Schubumkehrer nach Anspruch 1, **dadurch gekennzeichnet, dass** die Mittel zur Berechnung einer Variation von Kräften umfassen:

- Mittel (50a, 50b) zur Berechnung der zeitlichen Ableitungen der Rotationsgeschwindigkeit ($\Omega a$, $\Omega b$) von jedem der Elektromotoren;
- Mittel (56a, 56b) zur Berechnung der zeitlichen Ableitung des Erregerstromes (Ia, Ib), welcher jeden der Elektromotoren speist; und
- ein Mittel (58a, 58b) zur Berechnung einer Variation der auf den Umkehrer ausgeübten Kräfte aus der Berechnung der Ableitungen der Rotationsgeschwindigkeit und des Erregerstromes von jedem der Elektromotoren.

3. Schubumkehrer nach einem der Ansprüche 1 und 2, **dadurch gekennzeichnet, dass** die Mittel zum Ausgleichen der Variation der Kräfte auf den Umkehrer ein Mittel (58a, 58b) umfassen, um auf den Erregerstrom von jedem der Elektromotoren einzuwirken.

4. Schubumkehrer nach einem der Ansprüche 1 bis 3, **dadurch gekennzeichnet, dass** die Mittel zur Regelung Mittel zur Berechnung einer Beanspruchungsdifferenz zwischen den beiden Toren und Mittel zur Korrektur der Beanspruchungsdifferenz umfassen.

5. Schubumkehrer nach Anspruch 4, **dadurch gekennzeichnet, dass** die Mittel zur Berechnung der Beanspruchungsdifferenz zwischen den beiden Toren umfassen:

- Mittel (56a, 56b) zur Berechnung der zeitlichen Ableitungen des Erregerstroms (Ia, Ib), welcher jeden der Elektromotoren speist;
- ein Mittel zum Vergleich (60) der Ableitungen des Erregerstromes der Elektromotoren; und
- ein Mittel (60) zur Berechnung der Beanspruchungsdifferenz aus dem Vergleich der Ableitungen des Erregerstromes jedes Elektromotors.

6. Schubumkehrer nach einem der Ansprüche 4 und 5, **dadurch gekennzeichnet, dass** die Mittel zur Korrektur der Beanspruchungsdifferenz ein Mittel (60) umfassen, um auf dem Erregerstrom oder auf die Rotationsgeschwindigkeit von jedem der Elektromotoren einzuwirken.

7. Schubumkehrer nach einem der Ansprüche 2 bis 6, **dadurch gekennzeichnet, dass** die Mittel zur Regelung Mittel (48) zum Messen der Rotationsgeschwindigkeit ($\Omega a$, $\Omega b$) von jedem der Elektromotoren (14a, 14b) und Mittel (54) zum Messen des Erregerstroms (Ia, Ib) umfassen, welcher jeden der Elektromotoren speist.

8. Schubumkehrer nach einem der Ansprüche 1 bis 7, **dadurch gekennzeichnet, dass** die Mittel zur Regelung außerdem Mittel (44a, 44b, 50a, 50b) zur Ausarbeitung eines Rotationsgeschwindigkeitsstellwerts ($\Omega^*a$, $\Omega^*b$) und eines Erregerstromstellwerts ($I^*a$, $I^*b$) für jeden der Elektromotoren in Abhängigkeit einer Differenz zwischen einer reellen Position der Tore (10a, 10b) und eines Positionsstellwerts umfassen, der durch den elektronischen Rechner mit voller Kontrolle geliefert wird.

9. Schubumkehrer nach Anspruch 8, **dadurch gekennzeichnet, dass** die Mittel zur Steuerung außerdem Mittel (42) zum Messen der reellen Position der Tore umfassen.

**Claims**

1. A turbojet thrust reverser comprising two doors (10a, 10b) each displaceable between an open position and a closed position of the reverser by means of at least one respective control actuator (12),

   - two electric motors (14a, 14b) each driving said at least one control actuator for each door; each motor being controlled by an electronic control unit (18a, 18b) connected to a full authority digital engine control (20); and
   - two servo-control means for controlling the displacement of corresponding ones of said doors as a function of determined position references, said reverser being **characterised in that** said servo-control means include means for calculating variation in the forces exerted on the reverser and means for compensating said force variation enabling said doors to be displaced synchronously as a function of any variation in the forces exerted on the reverser and as a function of any force difference between the two doors.

2. A thrust reverser according to claim 1, **characterised in that** said means for calculating force variation comprise:

   - means (50a, 50b) for calculating the time derivatives of the speeds of rotation ($\Omega$a, $\Omega$b) of each of said electric motors;
   - means (56a, 56b) for calculating the time derivatives of the excitation currents (Ia, Ib) powering each of said electric motors; and
   - means (58a, 58b) for calculating variation in the forces exerted on the reverser on the basis of said calculated derivatives of the speeds of rotation and the excitation currents of each of said electric motors.

3. A thrust reverser according to claim 1 or claim 2, **characterised in that** said means for compensating said force variation on the reverser include means (58a, 58b) for acting on the excitation currents of each of said electric motors.

4. A thrust reverser according to any one of claims 1 to 3, **characterised in that** said servo-control means include means for calculating a force difference between the two doors, and means for correcting said force difference.

5. A thrust reverser according to claim 4, **characterised in that** said means for calculating said force difference between the two doors comprise:

   - means (56a, 56b) for calculating time derivatives of the excitation currents (Ia, Ib) feeding each of said electric motors;
   - means (60) for comparing said derivatives of the excitation currents of said electric motors; and
   - means (60) for calculating said force difference on the basis of said comparison of the derivatives of the excitation currents of the electric motors.

6. A thrust reverser according to claim 4 or claim 5, **characterised in that** said means for correcting the force difference comprise means (60) for acting on the excitation current or on the speed of rotation of each of said electric motors.

7. A thrust reverser according to any one of claims 2 to 6, **characterised in that** the servo-control means include means (48) for measuring the speed of rotation ($\Omega$a, $\Omega$b) of each of the electric motors (14a, 14b) and means (54) for measuring the excitation current (Ia, Ib) feeding each of said electric motors.

8. A thrust reverser according to any one of claims 1 to 7, **characterised in that** the servo-control means further comprise means (44a, 44b, 50a, 50b) for generating a reference speed of rotation ($\Omega2^*a$, $\Omega2^*b$) and a reference excitation current (I*a, I*b) for each of said electric motors as a function of a difference between a real position of each door (10a, 10b) and a position reference as delivered by said full authority digital engine controller.

9. A thrust reverser according to claim 8, **characterised in that** the servo-control means further comprise means (42) for measuring the real positions of said doors.

FIG.1

AVION

EP 1 413 736 B1

10

FIG.2

EP 1 413 736 B1

20

20a

18a

10a

Ωa

Ω*a    I*a    52a    56a    54

40a    44a    46a    50a        Ia    14a    48    12    42

Ia

58a

60

58b

20b

Ib

40b    44b    Ω*b    46b    50b    I*b    52b        Ib    14b    48    12    42

Ωb    56b    54

10b

18b